# EUROPÄISCHE PATENTSCHRIFT

(11) **EP 1 197 069 B1**
(45) Veröffentlichungstag und Bekanntmachung des Hinweises auf die Patenterteilung: **10.12.2003**
(21) Anmeldenummer: 00949366.9
(22) Anmeldetag: 17.07.2000
(51) Int. Cl.: H04N 5/272

(54) **VERFAHREN ZUR BILDDATENVERARBEITUNG UND KAMERAAUFNAHMESYSTEM**
METHOD FOR IMAGE DATA PROCESSING AND CAMERA RECORDING SYSTEM
PROCEDE DE TRAITEMENT DE DONNEES D'IMAGES ET SYSTEME D'ENREGISTREMENT PAR CAMERA

(30) Priorität: 15.07.1999 DE 19932663
(43) Veröffentlichungstag der Anmeldung: 17.04.2002
(73) Patentinhaber: Scannova GmbH, 72250 Freudenstadt (DE)
(72) Erfinder: SETZER, Steffen, 70565 Stuttgart (DE); WRIGHT, Dittmar, 70565 Stuttgart (DE)
(74) Vertreter: Hössle Kudlek & Partner
(86) Internationale Anmeldenummer: EP0006827
(87) Internationale Veröffentlichungsnummer: WO01006766

(56) Entgegenhaltungen:
- EP-A- 0 876 055
- GB-A- 2 321 565
- GB-A- 2 343 078

## Beschreibung

Die vorliegende Erfindung betrifft ein Verfahren zur Bilddatenverarbeitung, bei dem eine Trennung von einen Bildvordergrund darstellenden Objektdaten eines Bilddatensatzes von einem einen Bildhintergrund darstellenden Datensatz erfolgt, sowie ein Kameraaufnahmesystem, das insbesondere zur Durchführung eines derartigen Verfahrens geeignet ist.

Aus der Fernsehtechnik ist das sogenannte Blue-Box-Verfahren bekannt, bei dem eine den Hintergrund der aufzunehmenden Einstellung bildende Fläche als einfarbiger, insbesondere blauer Hintergrund ausgestaltet wird. Die Aufnahme eines Objektes vor diesem Hintergrund wird vor einer ersten Fernsehkamera bei einer Bildfrequenz von üblicherweise 50 bis 60 Halbbilder pro Sekunde aufgenommen, während parallel dazu von einer zweiten Fernsehkamera ein den blauen Hintergrund des ersten Bildes ersetzender Hintergrund, beispielsweise einer Wetterkarte, aufgenommen wird. Die beiden parallel aufgenommenen Bildsequenzen werden in einem Mischer synchronisiert übereinandergelegt, und der blaue Hintergrundbereich wird durch das mit der zweiten Fernsehkamera aufgenommene Bild ersetzt.

Bei dem sogenannten Blue-Box-Verfahren werden zwei prinzipielle Verfahren unterschieden, von denen ein erstes Verfahren auf einer Definition des Farbwerts beruht (die den Hintergrund darstellende Farbe wird als durchsichtig definiert), während bei dem zweiten, gewerblich insbesondere von der Firma Ultimatte umgesetzten Verfahren eine Definition des Hintergrunds über die Konstanz der Helligkeit und/oder Sättigung des Farbraumes des Hintergrundes erfolgt.

Der Vorteil der bekannten Verfahren liegt darin, daß die Verarbeitung der analogen Bilddaten relativ einfach und in Echtzeit erfolgt. Als Nachteil ist festzuhalten, daß der zumeist blaue, aber häufig auch grüne Hintergrund sehr gut ausgeleuchtet sein muß, denn die Farbe bzw. Helligkeit und/oder Sättigung der Farbe muß in der aufgenommenen Bildsequenz in hoher Qualität sehr gleichmäßig sein, was nur durch eine hervorragende Ausleuchtung der den Hintergrund darstellenden farbigen Fläche erreicht werden kann. Diese Ausleuchtung ist jedoch mit einem sehr großen Aufwand verbunden, da die typische Einleuchtzeit für ein Aufnahmestudio ca. eine Woche, oft sogar länger beträgt. Abgesehen von der damit verbundenen Mannzeit wird sehr viel Strom verbraucht und es entsteht eine für die in der Aufnahmeumgebung Tätigen unangenehm große Wärme. Des weiteren wirkt sich nachteilig aus, daß Schatten und /oder Reflexionen vermieden werden müssen, was das Ausleuchten zusätzlich erschwert. Reflexionen sind mit den bekannten Verfahren nicht, Schatten nur schwer korrigierbar.

Aus der Druckschrift GB 2 321 565 A ist ein Verfahren zur Bilddatenverarbeitung bekannt, bei dem ein Objekt vor einem Bildhintergrund aufgenommen wird, wobei der Hintergrund, der aus einem reflektierenden Material besteht, beleuchtet wird. Die Lichtprojektion auf den Hintergrund kann zeitveränderlich sein.

Aus der Druckschrift EP 0 876 055 A2 ist ein Verfahren bekannt, bei dem ein Objekt vor einem Bildhintergrund aufgenommen und in einem späteren Schritt von diesem Hintergrund getrennt wird. Hierzu wird ein Schirm zumindest teilweise hinter das Objekt aufgestellt und während der Aufnahme werden Muster auf diesen Schirm projiziert. Diese Muster werden beispielsweise erzeugt, indem eine oder mehrere Masken in einen Projektor eingesetzt werden.

Erfindungsgemäß werden dahingegen ein Verfahren zur Bilddatenverarbeitung mit den Merkmalen des Anspruchs 1 sowie ein Kameraaufnahmesystem mit den Merkmalen des Anspruchs 8 vorgeschlagen.

Der Erfindung liegt der Gedanke zugrunde, daß der Hintergrund in einer auf die Aufnahmefrequenz der aufnehmenden Kamera abgestimmten Frequenz definiert geändert wird. Unter Abstimmung ist hierbei zu verstehen, daß die Frequenz der Hintergrundänderung in einem bekannten Verhältnis zu der Aufnahmefrequenz steht. Es kann sich hierbei um ein ganzzahliges aber auch beliebiges Vielfaches der Aufnahmefrequenz handeln. Die Aufnahmefrequenz beträgt vorzugsweise ein Vielfaches der Wiedergabefrequenz, beispielsweise das Doppelte der üblichen Fernsehbildfrequenz, also ca. 100 bis 120 Halbbilder pro Sekunde. Grundsätzlich funktioniert das erfindungsgemäße Verfahren, wie nachfolgend noch beschrieben wird, bei beliebigen Aufnahmefrequenzen bis zu mehreren tausend Bildern pro Sekunde mit darauf abgestimmter Änderungsfrequenz des Hintergrunds. Voraussetzung ist, daß sich der Inhalt (Vordergrund) zweier aufeinanderfolgend aufgenommener Bilder nicht oder zumindest nur unwesentlich ändert, da jedes zweite Bild der Bildsequenz als Referenzbild verwendet wird.

Zur Durchführung des erfindungsgemäßen Verfahrens werden folien- oder scheibenartige Elemente verwendet, die gezielt sehr schnell optisch beeinflußbar sind, d.h. deren Farbe und/oder Helligkeit und/oder Sättigung in sehr kurzer Zeit von einem ersten vorgegebenen auf einen zweiten vorgegebenen Wert umgeschaltet werden kann. Hierzu werden elektrolumineszente oder auch elektrochrominante flächige Elemente eingesetzt.

Das erfindungsgemäße Verfahren eröffnet die Möglichkeit des Einsatzes digitaler Kameras und der Ausschöpfung deren technischer Vorteile. Die Aufnahme einer Bildsequenz mit der beispielsweise doppelten Frequenz bei sich mit entsprechend dieser Frequenz definiert änderndem Hintergrund führt zu einer Sequenz von Bildpaaren, wobei sich die beiden jeweils ein Bildpaar bildenden Bilder (bei den üblichen Bewegungsgeschwindigkeiten aufgenommener Objekte) bis auf den von einer Aufnahme zur nächsten definiert geänderten Hintergrund nicht oder kaum voneinander unterscheiden. Eines der beiden Bilder eines Bildpaares kann somit als Referenzbild für das jeweils andere Bild dienen.

Unter Ausnutzung der Vorteile der digitalen Aufnahmetechnik - jeder aufgenommene Bildpunkt (Pixel) eines Bildes kann mit dem entsprechenden Bildpunkt des darauffolgenden Bildes direkt verglichen werden - werden die beiden Bilder eines Bildpaares miteinander verglichen, indem beispielsweise ein jeder Bildpunkt des Referenzbildes von dem entsprechenden Bildpunkt des anderen Bildes abgezogen wird. Während sich als Resultat des Vergleiches für das den Vordergrund der Aufnahme bildende Objekt bei Nichtänderung (nicht oder langsam bewegtes Objekt) Null bzw. nahezu Null und bei leichter Änderung (schnell bewegtes Objekt) ein von Null verschiedener willkürlicher Wert ergibt, ergibt der Vergleich der Hintergrundflächen einen vorbestimmten definierten Wert, da der Hintergrund von der Aufnahme des einen Bildes zum nächsten Bild gezielt definiert verändert wurde. Die Änderung des Hintergrunds kann durch Umschalten zwischen zwei Zuständen oder durch graduelles kontinuierliches, beispielsweise sinusförmiges Oszillieren zwischen den beiden Zuständen erfolgen.

Um das den Vordergrund der Aufnahme bildende Objekt nun vom Hintergrund zu trennen, es sozusagen "auszuschneiden", werden alle Bildpunkte, denen beim Vergleich der beiden ein Bildpaar bildenden Bilder ein definierter Inhalt zugeordnet wurde, unterdrückt und ggf. durch den Inhalt eines parallel aufgenommenen Bildes (beispielsweise der Wetterkarte) ersetzt. Die Quelle dieses zweiten Bildes ist beliebig. Anstatt dem beschriebenen parallel aufgenommenen Bild kann auch ein Einzelbild (Festbild) als Hintergrund verwendet werden oder beispielsweise auch ein computergeneriertes Bild bzw. Bildsequenz.

In bevorzugter Ausgestaltung der Erfindung wird zur Ermittlung der Zuordnung eines Elementes eines Kamerabilddatensatzes zu dem Objektdatensatz oder dem Hintergrunddatensatz ein Vergleich der Datensätze von zu einem unterschiedlichen Zeitpunkt innerhalb einer Wiedergabefrequenz aufgenommenen Kamerabildern durchgeführt. Beträgt die Aufnahmefrequenz beispielsweise das Dreifache der späteren Wiedergabefrequenz, so werden während einer Wiedergabefrequenz, d.h. innerhalb einer der Wiedergabefrequenz entsprechenden Periode, drei Kamerabilder aufgenommen. Diese drei Bilder werden zur Identifizierung eines beliebigen Elementes im Kamerabild als Objekt oder Hintergrund miteinander verglichen. Der Vergleich erfolgt vorteilhafterweise paarweise. So wird beispielsweise das erste Kamerabild dieser Abfolge von drei Bildern zunächst mit dem zweiten Bild und anschließend mit dem dritten Bild verglichen, und zuletzt wird das zweite Bild mit dem dritten Bild verglichen. Um das Verfahren ökonomischer zu gestalten, kann der Vergleich schrittweise durchgeführt werden, wobei nachgeordnete Vergleichsschritte nur durchgeführt werden, wenn die davor liegenden Vergleichsschritte noch kein eindeutiges Ergebnis liefern, d.h. keine eindeutige Einordnung des Kamerabildelements als Objekt oder Hintergrund zulassen.

In besonders bevorzugter Ausgestaltung ist der Vergleich eine Subtraktion von Elementen gleicher Koordinaten oder Bereiche der Kamerabilddatensätze, wobei die miteinander zu vergleichenden Elemente der Kamerabilddatensätze einzelne Pixel oder aber auch Pixelbereiche sein können. Als besonders vorteilhaft erweist sich ein Vergleich von Pixelbereichen, da das Verfahren dann schneller durchgeführt werden kann. Hier bietet es sich an, zunächst größere Pixelbereiche auszuwählen, um diese dann gegebenenfalls schrittweise in Unterbereiche zu unterteilen. Das erfindungsgemäße Verfahren eröffnet auch die Möglichkeit nicht nur zweidimensionale Pixelbereiche, sondern auch n-dimensionale Pixelbereiche miteinander zu vergleichen.

Wie bereits vorstehend erwähnt, kann das erfindungsgemäße Verfahren bei beliebigen Aufnahmefrequenzen bis zu mehreren tausend Bildern pro Sekunde durchgeführt werden. Je höher die Aufnahmefrequenz, desto größer ist die Anzahl der innerhalb einer Wiedergabeperiode aufgenommenen Bilder mit unterschiedlichen Hintergrundzuständen (insbesondere Hintergrundhelligkeiten), wodurch die Vergleichsmöglichkeiten, d.h. die Permutationen der Vergleichspaare, deutlich zunehmen. Dadurch ist eine bessere Grundlage für die Zuordnung eines Kamerabildelementes zu Hintergrunddatensatz oder Objektdatensatz gegeben.

Die Erfindung eröffnet darüber hinaus die Möglichkeit, bei einer hohen Aufnahmefrequenz und gradueller Hintergrundsänderung das Reflexionsverhalten von Objekten im Kamerabild zu bewerten und daraus Rückschlüsse auf den Brechungsindex und das Material des Objekts zu ziehen. Dies wiederum gestattet die Anpassung betroffener Datensatzelemente des Objektdatensatzes an den neuen, dem ursprünglichem Aufnahmehintergrund ersetzenden Ersatzhintergrund. IM Gegensatz zu den aus dem Stand der Technik bekannten Verfahren ist somit erfindungsgemäß nicht nur eine Korrektur von Reflexionen (und Schatten) möglich, sondern auch deren Auswertung, um die Erkennung von Objekt- oder Hintergrundzugehörigkeit eines Bildelements oder die Anpassung des Bildes bzw. Objektes an einen eingesetzten Hintergrund zu ermöglichen. Somit können erfindungsgemäß Schatten und/oder Reflexionen auf dem Objekt bzw. dem Hintergrund erkannt und je nach Anwendung oder Wunsch des Benutzers unterdrückt oder in anderer Art und Weise angepaßt und verarbeitet werden.

Vorzugsweise erfolgt die die Durchführung des erfindungsgemäßen Verfahrens unter Einsatz eines neuronalen Netzes oder anderer Methoden der sogenannten Künstlichen Intelligenz (KI). Damit wird eine besonders gute Erkennung und Zuordnung der Bildelemente zu Objekt, Hintergrund, Spiegelung, Schatten, etc. erreicht.

Schließlich eröffnet die Erfindung die Möglichkeit, die Kamerabilddatensätze nicht nur auf eine Zuordnung im zweidimensionalen Bereich (Objekt- und Hintergrundzugehörigkeit) zu untersuchen, sondern auch weitere Informationen über das Objekt bzw. den Hintergrund, wie beispielsweise die Geschwindigkeit u.ä., zu erhalten. Dies wiederum läßt Rückschlüsse auf dreidimensionale Daten des Kamerabilddatensatzes (Abstand von der Kamera etc.) zu, so daß die Erfindung nicht nur für die zweidimensionale, sondern auch für die mehrdimensionale Bilddatenverarbeitung geeignet ist.

Weiterhin als vorteilhaft erweist es sich, den Aufnahmehintergrund während der Aufnahme nur teilweise zu ändern.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Figur 1: zeigt ein Blockschaltbild zur Veranschaulichung der Erfindung.
- Figur 2: zeigt ein Blockschaltbild zur Veranschaulichung einer in der vorliegenden Erfindung zu verwendenden Auswerteeinheit.

Zentraler Bestandteil der Erfindung ist die Aufnahme eines oder mehrerer Objekte (Objekte 1 bis m) durch eine oder mehrere Kameras (Kameras 1 bis n), wobei sich die Objekte vor einem Hintergrund befinden. Der Hintergrund ist erfindungsgemäß hochfrequent beeinflußbar bzw. änderbar. Die Änderungsfrequenz ist dabei auf eine Aufnahmefrequenz der aufnehmenden Kamera(s) abgestimmt. Die Änderung des Hintergrunds erfolgt insbesondere bezüglich dessen Farbe und/oder Helligkeit und/oder Sättigung.

Die beeinflußbaren Parameter des Hintergrunds sind somit neben der Änderungsfrequenz die Farbe, die Helligkeit und/oder die Sättigung. Bei der bzw. den Kamera (s) ist der beeinflußbare Parameter neben den üblichen Kameraparametern die Aufnahmefrequenz, gegebenenfalls eingeschränkt auf einen definierbaren Bildbereich x*y. Diese Parameter werden von der Auswerteeinheit gesteuert, wobei auch eine direkte Steuerung, insbesondere zum Abgleich der Kamera(s) auf den Hintergrund, möglich ist.

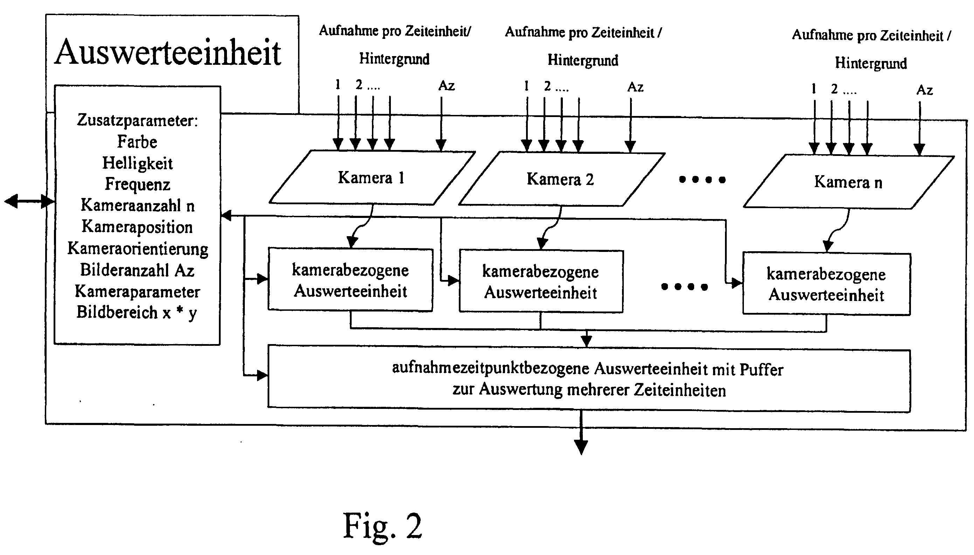

Mit den Kameras 1 bis n werden die durch den Hintergrund eingeschlossenen, d.h. von dem Hintergrund umgebenen Objekte 1 bis m aufgenommen, wobei die Aufnahmefrequenz der Kameras ein Vielfaches der späteren Wiedergabefrequenz ist. Als Ergebnis liegen Az Kamerabilder von n Kameras pro Zeiteinheit z vor, die der in Figur 2 näher dargestellten Auswerteeinheit zugeführt werden.

In der in Figur 2 dargestellten Auswerteeinheit ist für jede der 1 bis n Kameras eine eigene kamerabezogene Auswerteeinheit vorgesehen, der jeweils die Daten der Az Kamerabilder zugeführt werden. Unter Berücksichtigung der ebenfalls jeder kamerabezogenen Auswerteeinheit zugeführten Zusatzparameter, wie sie vorstehend beschrieben sind, werden in jeder kamerabezogenen Auswerteeinheit das bzw. die Objekte von dem Hintergrund getrennt, indem eine Identifikation und eine Zuordnung einzelner Kamerabildelemente (Pixel oder Pixelbereiche) zu "Objekt" oder "Hintergrund" erfolgt. Nach erfolgter Zuordnung werden die als dem Hintergrund zugehörigen Bildelemente entfernt und durch Bildelemente eines Ersatzhintergrunds ersetzt. In einfachen Anwendungen handelt es sich bei diesem Ersatzhintergrund um ein stehendes unveränderliches Bild, beispielsweise die Wetterkarte. Jedoch sind auch komplexere Anwendungen möglich und werden durch die vorliegende Erfindung erleichtert, wie beispielsweise das Einblenden von separat aufgenommenen oder per Computer erzeugten laufenden Bildern als Hintergrund bei Studioaufnahmen. Der Ablauf der Identifikation wurde vorstehend bereits beschrieben.

Die von den einzelnen kamerabezogenen Auswerteeinheiten erzeugten Bilddaten werden dann einer zentralen aufnahmezeitpunktbezogenen Auswerteeinheit zugeführt, die einen Puffer zur Auswertung mehrerer Zeiteinheiten umfaßt und zur Synchronisierung und Abstimmung der von den kamerabezogenen Auswerteeinheiten gelieferten Daten dient. Die Verwendung mehrerer Kameras gestattet die Erzeugung von Bilddaten, die zu einer von einem Betrachter aus unterschiedlichen Perspektiven betrachtbaren "dreidimensionalen" Wiedergabe geeignet sind. Ein derartiges Aufnahme- und Wiedergabeverfahren ist beispielsweise in der deutschen Patentanmeldung 199 13 853.2 beschrieben.

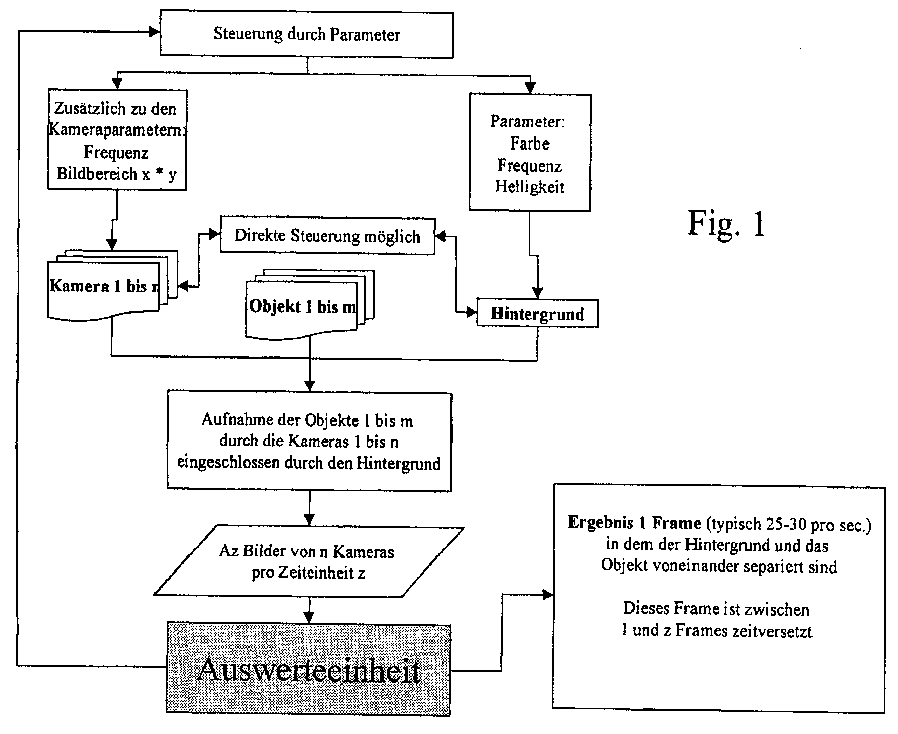

Die von der zentralen aufnahmezeitpunktbezogenen Auswerteeinheit erzeugten Daten werden aus der Auswerteeinheit ausgegeben, so daß als Ergebnis (vgl. Figur 1) ein Einzelbild (Frame) vorliegt, in dem der Hintergrund und das Objekt voneinander separiert sind. Eine typische Wiedergabefrequenz der erzeugten Frames beträgt ca. 25 bis 30 sec⁻¹ (Fernsehbildfrequenz).

## Patentansprüche

1. Verfahren zur Bilddatenverarbeitung, bei dem eine Trennung von einen Bildvordergrund darstellenden Objektdaten eines Bilddatensatzes (Objektdatensatz) von einem einen Bildhintergrund darstellenden Datensatz (Hintergrunddatensatz) erfolgt, bei dem ein von einer Kamera aufzunehmender Hintergrund in einer auf eine Aufnahmefrequenz der aufnehmenden Kamera abgestimmten Frequenz geändert wird, wobei ein elektrolumineszentes oder elektrochrominantes flächiges Element als Hintergrund eingesetzt wird.

2. Verfahren nach Anspruch 1, bei dem die Änderung des Hintergrunds durch Umschalten zwischen zwei Zuständen erfolgt.

3. Verfahren nach Anspruch 1, bei dem die Änderung des Hintergrunds graduell zwischen zwei Zuständen mit einer Vielzahl von Zwischenzuständen erfolgt.

4. Verfahren nach einem der Ansprüche 1 bis 3, bei dem die Farbe und/oder Helligkeit und/oder Sättigung des Hintergrunds geändert wird.

5. Verfahren nach einem der Ansprüche 1 bis 4, bei dem die Aufnahmefrequenz der Kamera ein Vielfaches der Wiedergabefrequenz ist.

6. Verfahren nach Anspruch 5, bei dem die Aufnahmefrequenz das Doppelte der üblichen Fernsehbildfrequenz ist.

7. Verfahren nach einem der Ansprüche 1 bis 6, bei dem zur Ermittlung der Zuordnung eines Elementes eines Kamerabilddatensatzes zu dem Objektdatensatz oder dem Hintergrunddatensatz ein Vergleich der Datensätze von zu einem unterschiedlichem Zeitpunkt innerhalb einer Wiedergabefrequenz aufgenommenen Kamerabildern durchgeführt wird.

8. Verfahren nach Anspruch 7, bei dem der Vergleich eine Subtraktion von Elementen gleicher Koordinaten oder Bereiche der Kamerabilddatensätze beinhaltet.

9. Verfahren nach Anspruch 7 oder 8, bei dem die miteinander verglichenen Elemente der Kamerabilddatensätze Pixel sind.

10. Verfahren nach Anspruch 8 oder 9, bei dem die miteinander verglichenen Elemente der Kamerabilddatensätze mehr dimensionale Pixelbereiche sind.

11. Verfahren nach einem der Ansprüche 1 bis 6, bei dem zur Erkennung und Zuordnung der Elemente der Kamerabilddatensätze Methoden der Künstlichen Intelligenz, wie neuronale Netze, verwendet werden.

12. Verfahren nach einem der Ansprüche 6 bis 11, bei dem die als dem Hintergrunddatensatz zugehörig identifizierten Elemente des Kamerabilddatensatzes durch Elemente entsprechender Koordinaten oder Bereiche eines Datensatzes eines Ersatzhintergrunds ersetzt werden.

13. Kameraaufnahmesystem, insbesondere zur Durchführung des Verfahrens nach einem der Ansprüche 1 bis 12, mit mindestens einer Kamera zur Aufnahme eines vor einem Hintergrund befindlichen Objekts, wobei eine Änderung des Hintergrunds in einer auf eine Aufnahmefrequenz der aufnehmenden Kamera abgestimmten Frequenz erfolgt, wobei als Hintergrund ein optisch definiert beeinflußbares folien- oder scheibenartiges Element vorgesehen ist, das ein elektrolumineszentes oder elektrochrominantes flächiges Element ist.

## Claims

1. Method of processing image data, wherein object data of an image data set (object data set) forming the foreground of an image are separated from a data set (background data set) constituting the background of an image, wherein a background to be recorded by a camera is changed in a frequency matched to a recording frequency of the recording camera, an electro-luminescent or electro-chrominant flat element being used as the background.

2. Method according to claim 1, wherein the change to the background is achieved by switching between two states.

3. Method according to claim 1, wherein the change to the background is achieved gradually between two states with a plurality of intermediate states.

4. Method according to one of claims 1 to 3, wherein the colour and/or brightness and/or saturation of the background is altered.

5. Method according to one of claims 1 to 4, wherein the recording frequency of the camera is a multiple of the playback frequency.

6. Method according to claim 5, wherein the recording frequency is twice the normal television frequency.

7. Method according to one of claims 1 to 6, wherein, in order to determine the allocation of an element of a camera image data set to the object data set or the background data set, a comparison of the data sets of camera images taken at different times within a playback frequency is carried out.

8. Method according to claim 7, wherein the comparison comprises a subtraction of elements of the same coordinates or areas of the camera image data sets.

9. Method according to claim 7 or 8, wherein the elements of the camera image data sets which are compared with one another are pixels.

10. Method according to claim 8 or 9, wherein the elements of the camera image data sets which are compared with one another are multi-dimensional pixel areas.

11. Method according to one of claims 1 to 6, wherein Artificial Intelligence methods such as neuronal networks are used to recognise and allocate the elements of the camera image data sets.

12. Method according to one of claims 6 to 11, wherein the elements of the camera image data set identified as belonging to the background data set are replaced by elements of corresponding coordinates or areas of a data set of a substitute background.

13. Camera recording system, particularly for carrying out the method according to one of claims 1 to 12, with at least one camera for recording an object located in front of a background, wherein the background is changed in a frequency matched to a recording frequency of the recording camera, while the background used is a film- or disc-shaped element capable of being influenced in optically defined manner which is an electro-luminescent or electro-chrominant flat element.

## Revendications

1. Procédé de traitement de données d'images, dans lequel une séparation de données d'objet représentant un premier plan d'image d'un jeu de données d'images (jeu de données d'objet) a lieu depuis un jeu de données représentant un arrière-plan d'image (jeu de données d'arrière-plan), dans lequel un arrière-plan à enregistrer par une caméra est modifié en une fréquence adaptée à une fréquence d'enregistrement de la caméra enregistrante, un élément plat électroluminescent ou électrochrominant étant utilisé comme arrière-plan.

2. Procédé selon la revendication 1, dans lequel la modification de l'arrière-plan a lieu en commutant entre deux états.

3. Procédé selon la revendication 1, dans lequel la modification de l'arrière-plan a lieu de manière graduelle entre deux états avec une multitude d'états intermédiaires.

4. Procédé selon l'une des revendications 1 à 3, dans lequel la couleur et/ou la luminosité et/ou la saturation de l'arrière-plan est modifiée.

5. Procédé selon l'une des revendications 1 à 4, dans lequel la fréquence d'enregistrement de la caméra est un multiple de la fréquence de reproduction.

6. Procédé selon la revendication 5, dans lequel la fréquence d'enregistrement est le double de la fréquence habituelle d'images de télévision.

7. Procédé selon l'une des revendications 1 à 6, dans lequel pour déterminer l'attribution d'un élément d'un jeu de données d'images de caméra au jeu de données d'objet ou au jeu de données d'arrière-plan, on effectue une comparaison des jeux de données d'images de caméra enregistrées à un moment différent pendant une fréquence de reproduction.

8. Procédé selon la revendication 7, dans lequel la comparaison contient une soustraction d'éléments de mêmes coordonnées ou de zones des jeux de données d'images de caméra.

9. Procédé selon l'une ou l'autre des revendications 7 et 8, dans lequel les éléments comparés les uns aux autres, des jeux de données d'images de caméra, sont des pixels.

10. Procédé selon l'une ou l'autre des revendications 8 et 9, dans lequel les éléments comparés les uns aux autres, des jeux de données d'images de caméra, sont des zones de pixels à plusieurs dimensions.

11. Procédé selon l'une des revendications 1 à 6, dans lequel on utilise des méthodes de l'intelligence artificielle, telles que des réseaux neuronaux pour la reconnaissance et l'attribution des éléments de données d'images de caméra.

12. Procédé selon l'une des revendications 6 à 11, dans lequel on remplace les éléments du jeu de données d'image de caméra identifiés comme étant associés au jeu de données d'arrière-plan par des éléments à coordonnées correspondantes ou par des zones d'un jeu de données d'un arrière-plan de remplacement.

13. Système d'enregistrement à caméra, en particulier pour mettre en oeuvre le procédé selon l'une des revendications 1 à 12, comportant au moins une caméra pour enregistrer un objet se trouvant devant un arrière-plan, une modification de l'arrière-plan ayant lieu dans une fréquence adaptée à la fréquence d'enregistrement de la caméra enregistrante, et dans lequel est prévu comme arrière-plan un élément en forme de feuille ou de disque influençable de manière optiquement défini, qui est un élément plat électroluminescent ou électrochrominant.
